# EUROPEAN PATENT SPECIFICATION

(11) **EP 3 270 698 B1**
(45) Date of publication and mention of the grant of the patent: **22.04.2020**
(21) Application number: 16714118.3
(22) Date of filing: 15.03.2016
(51) Int. Cl.: A01N 57/34, A01N 25/02, A01P 1/00

(54) **FREEZE STABLE TETRAKIS(HYDROXYMETHYL)PHOSPHONIUM SULFATE FORMULATIONS**
GEFRIERSTABILE TETRAKIS(HYDROXYMETHYL)PHOSPHONIUM SULFAT ZUSAMMENSETZUNGEN
TETRAKIS(HYDROXYMETHYL)PHOSPHONIUM SULFATE FORMULATIONS STABLES À LA CONGÉLATION

(30) Priority: 18.03.2015 US 201562134801 P
(43) Date of publication of application: 24.01.2018
(73) Proprietor: Rohm and Haas Company, Philadelphia, PA 19106 (US)
(72) Inventor: STEPHENS, Randall W., Collegeville, PA 19426 (US); WARWICK, Eileen F., Collegeville, PA 19426 (US)
(74) Representative: Houghton, Mark Phillip
(86) International application number: PCT/US2016/022408
(87) International publication number: WO 2016/149232

(56) References cited:
- JP-A- 2000 290 107
- US-A1- 2004 087 448
- US-A1- 2010 099 596
- US-A1- 2010 137 170

## Description

This invention relates to formulations of tetrakis(hydroxymethyl)phosphonium sulfate (THPS) which do not freeze when stored at low temperatures.

Formulations of biocidal active ingredients often are stored or used under conditions including extremely low temperatures, including, e.g., oil and gas extraction. Compositions containing THPS and various solvents have been reported in the literature, but compositions which are stable at low temperatures are not known. For example, WO2015/017705 discloses compositions containing THPS and various solvents, but this reference does not suggest the compositions claimed herein.

US 2010/137170 discloses stabilized sulfide control compositions for well treatment. US 2010/0099596 discloses a method and composition to remove iron and iron sulfide compounds from pipe line networks. US 2004/0087447 discloses controlled release formulations of anionic herbicides. JP-A-2000 290107 discloses seed disinfectant.

### STATEMENT OF THE INVENTION

The present invention is directed to a composition comprising:
(a) tetrakis(hydroxymethyl)phosphonium sulfate (THPS); (b) water; and (c) 1,2-propanediol; wherein the weight percentages of (a), (b) and (c) are within the area on a ternary phase diagram for (a), (b) and (c) bounded by five points: (A) 20% THPS/40% water/40% 1,2-propanediol; (B) 20% THPS/20% water/60% 1,2-propanediol; (C) 65% THPS/22% water/13% 1,2-propanediol; (D) 65% THPS/25% water/10% 1,2-propanediol; and (E) 40% THPS/28% water/32% 1,2-propanediol,
or comprising (a), (b), (c) and no more than 5 wt% additional ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the points as hereinbefore defined.

The present invention is further directed to a composition comprising:
(a) tetrakis(hydroxymethyl)phosphonium sulfate (THPS); (b) water; and (c) ethylene glycol; wherein the weight percentages of (a), (b) and (c) are within the area on a ternary phase diagram for (a), (b) and (c) bounded by the three points: (J) 7% THPS/44% water/50% ethylene glycol; (K) 25% THPS/14% water/61% ethylene glycol; and (L) 68% THPS/22% water/10% ethylene glycol,
or comprising (a), (b), (c) and no more than 5 wt% additional ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the points as hereinbefore defined.

The present invention is further directed to a composition comprising:
(a) tetrakis(hydroxymethyl)phosphonium sulfate (THPS); (b) water; and (c) glycerine; wherein the weight percentages of (a), (b) and (c) are within the area on a ternary phase diagram for (a), (b) and (c) bounded by the three points: (O) 10% THPS/45% water/45% glycerine; (P) 10% THPS/25% water/65% glycerine; and (Q) 44% THPS/18% water/38% glycerine,
or comprising (a), (b), (c) and no more than 5 wt% additional ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the points as hereinbefore defined.

### BRIEF DESCRIPTION OF THE DRAWINGS

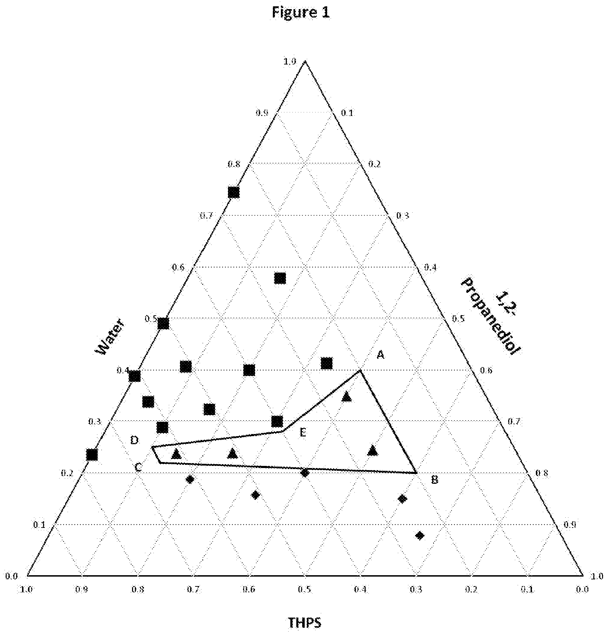

Figure 1 is a ternary phase diagram for THPS/water/1,2-propanediol, with the claimed area marked by the points A, B, C, D and E which are the vertices of a polygon. The symbol "▲" indicates a point for which the mixture of that composition is a free-flowing single liquid phase after 24 hour storage at -40 °C. The symbol "■" indicates a point for which the mixture is solid under these conditions and "◆" indicates a point for which the mixture is either an extremely viscous fluid or a fused glassy solid under these conditions.

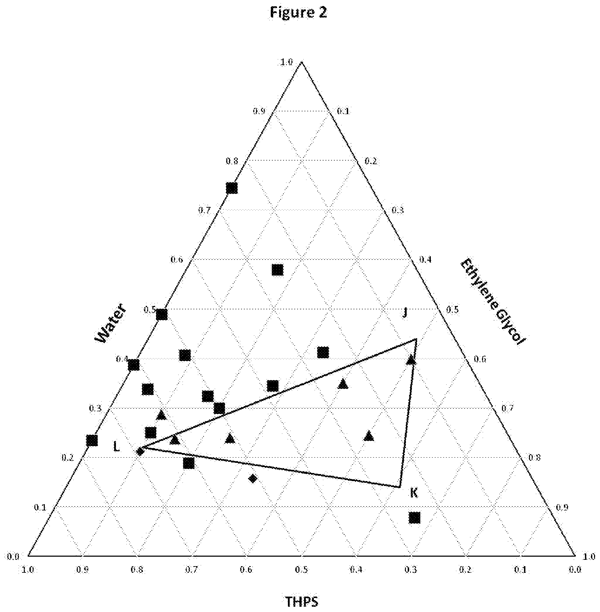

Figure 2 is a ternary phase diagram for THPS/water/ethylene glycol. The symbols are the same as those indicated for Figure 1. The claimed area is marked by the points J, K and L, which are the vertices of a triangle.

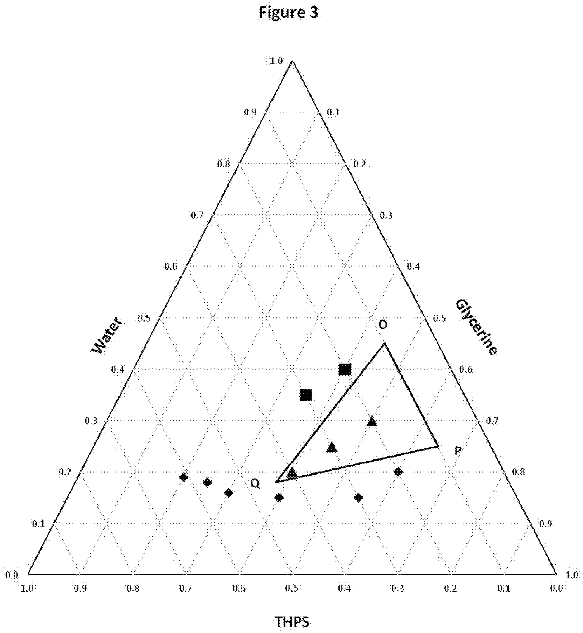

Figure 3 is a ternary phase diagram for THPS/water/glycerine. The symbols are the same as those indicated for Figure 1. The claimed area is marked by the points O, P and Q, which are the vertices of a triangle.

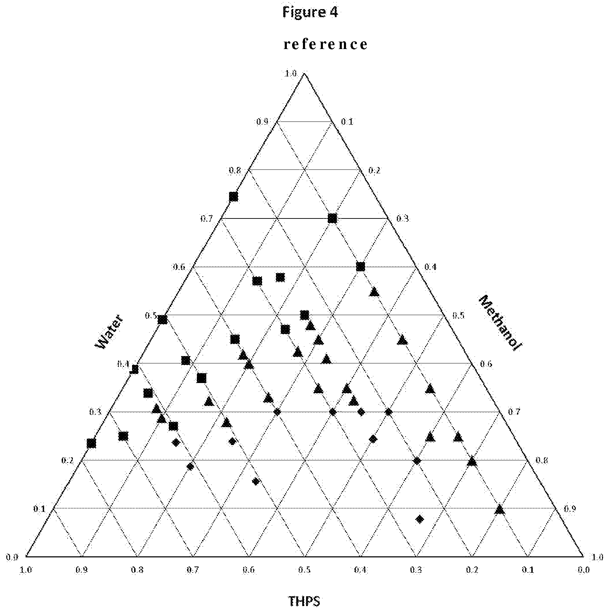

Figure 4 is a reference ternary phase diagram for THPS/water/methanol. The symbols are the same as those indicated for Figure 1.

### DETAILED DESCRIPTION F THE INVENTION

Unless otherwise specified, temperatures are in degrees centigrade (°C), and references to percentages are by weight (wt%). All operations were performed at room temperature (20-25 °C), unless otherwise specified. 1,2-propanediol is also known as propylene glycol (PG). A polygon is a plane figure having at least three sides, with all sides being straight lines.

Compositions of THPS, water and PG within the scope of this invention are those for which the weight percentages are within the polygon defined by the five points, A, B, C, D and E listed above on a ternary phase diagram for THPS, water and PG. In one preferred embodiment of the invention, the composition is within the area defined by the points: (A), (B); (F) 30% THPS/20.5% water/49.5% 1,2-propanediol; and (G) 30% THPS/34% water/36% 1,2-propanediol; or the area defined by the points: (C), (D), (H) 47% THPS/27% water/26% 1,2-propanediol; and (I) 47% THPS/21.5% water/21.5% 1,2-propanediol. Each of the two areas in the preceding description is a trapezoid.

Compositions of THPS, water and ethylene glycol within the scope of this invention are those for which the weight percentages are within the triangle defined by the three points, J, K and L listed above on a ternary phase diagram for THPS, water and ethylene glycol. In one preferred embodiment of the invention, the composition is within the area defined by the points: (M) 20% THPS/39% water /41% ethylene glycol; (N) 24% THPS/18% water/58% ethylene glycol; and (L).

Compositions of THPS, water and glycerine within the scope of this invention are those for which the weight percentages are within the triangle defined by the three points, O, P and Q listed above on a ternary phase diagram for THPS, water and glycerine. In one preferred embodiment of the invention, the composition is within the area defined by the points: (R) 15% THPS/37% water/ 48% glycerine; (S) 15% THPS/28% water/57% glycerine; and (Q)
The composition may contain no more than 5 wt% of other ingredients, e.g., solvents, process impurities associated with the commercial active ingredient, surfactants, defoamer agents, dispersing agents, brand identification markers; preferably no more than 4 wt% of other ingredients, preferably no more than 3 wt%, preferably no more than 2 wt%, preferably no more than 1 wt%, preferably no more than 0.5 wt%, preferably no more than 0.3 wt%. A composition containing other ingredients is evaluated by normalizing the total of the weight percentages of THPS, water and 1,2-propanediol to 100%; the composition is within the scope of the present invention if the point on a ternary phase diagram representing these normalized amounts is within the stated area.

The composition of the present invention is a free-flowing liquid even after storage at -40 °C. Known aqueous solutions of THPS are not physically stable under these conditions. The prior art provided no indication that one could make a solution of THPS that would not freeze or phase-separate at -40 °C.

### EXAMPLES

### Example (Comparative)

To a glass sample vial was added: (i) commercial aqueous solution of bis[tetrakis(hydroxymethyl)phosphonium] sulfate containing 76.5 wt% THPS and (ii) water, or an alcohol selected from methanol, ethanol or isopropanol (IPA), or a combination of water and one of the listed alcohols in an amount sufficient to produce a 20 g sample. Each sample was then placed in a -40 °C freezer. The samples were observed after 24 hours and the physical form was noted in Table 1. Reexamination of the samples after several days revealed them to be unchanged from the original observation. Only those samples diluted with a combination of water and methanol appeared as free flowing homogeneous liquids.

**Table 1. Impact of Alcohol Diluents**

| **Sample** | **THPS** | **Water** | **Alcohol** | **MeOH** | **EtOH** | **IPA** |
|---|---|---|---|---|---|---|
| control | 76.5% | 23.5% | 0.0% | Frozen | Frozen | Frozen |
| water only | 61.2% | 38.8% | 0.0% | Frozen | Frozen | Frozen |
| water only | 51.0% | 49.0% | 0.0% | Frozen | Frozen | Frozen |
| water only | 25.5% | 74.5% | 0.0% | Frozen | Frozen | Frozen |
| Alcohol Only | 61.2% | 18.8% | 20.0% | small bi-layer liquid | bi-layer liquid | bi-layer liquid |
| Alcohol Only | 51.0% | 15.7% | 33.3% | bi-layer liquid | bi-layer liquid | bi-layer liquid |
| Alcohol Only | 25.5% | 7.8% | 66.7% | bi-layer liquid/solid | bi-layer liquid | bi-layer liquid |
| Equal Blend | 61.2% | 28.8% | 10.0% | Free flowing liquid | Frozen | Frozen |
| Equal Blend | 51.0% | 32.3% | 16.7% | Free flowing liquid | Frozen | Frozen |
| Equal Blend | 25.5% | 41.2% | 33.3% | Free flowing liquid | Frozen | Frozen |
| Low Alcohol | 61.2% | 33.8% | 5.0% | Frozen | Frozen | Frozen |
| Low Alcohol | 51.0% | 40.7% | 8.3% | Frozen | Frozen | Frozen |
| Low Alcohol | 25.5% | 57.8% | 16.7% | Frozen | Frozen | Frozen |
| High Alcohol | 61.2% | 23.8% | 15.0% | bi-layer liquid | bi-layer liquid | bi-layer liquid/solid |
| High Alcohol | 51.0% | 24.0% | 25.0% | bi-layer liquid | bi-layer liquid | bi-layer liquid/solid |
| High Alcohol | 25.5% | 24.5% | 50.0% | bi-layer liquid | bi-layer liquid | bi-layer liquid/solid |

### Example 2. (Comparative)

To a glass sample vial was added commercial solution of bis[tetrakis(hydroxymethyl)phosphonium] sulfate solution, water and methanol in an amount sufficient to produce a 20 g sample. The composition of each sample is shown below in table 2. Each sample was then placed in a -40 °C freezer. The samples were observed after 24 hours and the physical form was noted in Table 2. Reexamination of the samples after several days revealed them to be unchanged from the original observation.

**Table 2.**

| **THPS** | **Water** | **Methanol** | **Condition** |
|---|---|---|---|
| 10% | 10% | 80% | Free flowing liquid |
| 10.0% | 20.0% | 70.0% | Free flowing liquid |
| 10.0% | 25.0% | 65.0% | Free flowing liquid |
| 10.0% | 35.0% | 55.0% | Free flowing liquid |
| 10.0% | 45.0% | 45.0% | Free flowing liquid |
| 10.0% | 55.0% | 35.0% | Free flowing liquid |
| 10.0% | 60.0% | 30.0% | Frozen |
| 10.0% | 70.0% | 20.0% | Frozen |
| 15% | 25% | 60% | Free flowing liquid |
| 20.0% | 20.0% | 60.0% | Bi-layer liquid |
| 20.0% | 30.0% | 50.0% | Bi-layer liquid |
| 25.0% | 30.0% | 45.0% | bi-layer liquid |
| 25.0% | 32.5% | 42.5% | Free flowing liquid |
| 25.0% | 35.0% | 40.0% | Free flowing liquid |
| 25.0% | 45.0% | 30.0% | Free flowing liquid |
| 25.0% | 48.0% | 27.0% | Free flowing liquid |
| 25.0% | 50.0% | 25.0% | Frozen |
| 25.5% | 7.8% | 66.7% | bi-layer liquid/solid |
| 25.5% | 24.5% | 50.0% | bi-layer liquid |
| 25.5% | 41.2% | 33.3% | Free flowing liquid |
| 25.5% | 57.8% | 16.7% | Frozen |
| 25.5% | 74.5% | 0.0% | Frozen |
| 30.0% | 30.0% | 40.0% | Bi-layer liquid |
| 30.0% | 35.0% | 35.0% | Bi-layer liquid |
| 30% | 35% | 35% | Free flowing liquid |
| 30.0% | 42.5% | 27.5% | Free flowing liquid |
| 30.0% | 47.0% | 23.0% | Frozen |
| 30.0% | 57.0% | 13.0% | Frozen |
| 40.0% | 30.0% | 30.0% | bi-layer liquid |
| 40.0% | 33.0% | 27.0% | Free flowing liquid |
| 40.0% | 40.0% | 20.0% | Free flowing liquid |
| 40.0% | 42.0% | 18.0% | Free flowing liquid |
| 40% | 45% | 15% | Frozen |
| 50.0% | 37.0% | 13.0% | Frozen |
| 50.0% | 28% | 22% | Free flowing liquid |
| 51.0% | 15.7% | 33.3% | bi-layer liquid |
| 51.0% | 24.0% | 25.0% | bi-layer liquid |
| 51.0% | 32.3% | 16.7% | Free flowing liquid |
| 51.0% | 40.7% | 8.3% | Frozen |
| 51.0% | 49.0% | 0.0% | Frozen |
| 60% | 27% | 13% | Free flowing liquid |
| 61.2% | 18.8% | 20.0% | small bi-layer liquid |
| 61.2% | 23.8% | 15.0% | bi-layer liquid |
| 61.2% | 28.8% | 10.0% | Free flowing liquid |
| 61.2% | 30.8% | 8.0% | Free flowing liquid |
| 61.2% | 33.8% | 5.0% | Frozen |
| 61.2% | 38.8% | 0.0% | Frozen |
| 70.0% | 25.0% | 5.0% | Frozen |
| 76.5% | 23.5% | 0.0% | Frozen |

### Example 3 (only compositions as defined in claim 3 are according to the invention)

To a glass sample vial was added commercial solution of bis[tetrakis(hydroxymethyl)phosphonium] sulfate solution, water and ethylene glycol in an amount sufficient to produce a 20 g sample. The composition of each sample is shown below in Table 3. Each sample was then placed in a -40 °C freezer. The samples were observed after 24 hours and the physical form was noted in Table 3. Reexamination of the samples after several days revealed them to be unchanged from the original observation.

**Table 3 Ethylene Glycol.**

| **THPS** | **Water** | **Ethylene Glycol** | **Condition** |
|---|---|---|---|
| 10.0% | 40.0% | 50.0% | Liquid |
| 25.0% | 35.0% | 40.0% | Liquid |
| 25.5% | 7.8% | 66.7% | Frozen |
| 25.5% | 24.5% | 50.0% | Slightly Viscous Liquid |
| 25.5% | 41.2% | 33.3% | Frozen |
| 25.5% | 57.8% | 16.7% | Frozen |
| 25.5% | 74.5% | 0.0% | Frozen |
| 38.0% | 34.5% | 27.5% | Partially Frozen |
| 50.0% | 30.0% | 20.0% | Partially Frozen |
| 51.0% | 15.7% | 33.3% | Slightly Viscous Liquid |
| 51.0% | 24.0% | 25.0% | Slightly Viscous Liquid |
| 51.0% | 32.3% | 16.7% | Frozen |
| 51.0% | 40.7% | 8.3% | Frozen |
| 51.0% | 49.0% | 0.0% | Frozen |
| 61.2% | 18.8% | 20.0% | Frozen |
| 61.2% | 23.8% | 15.0% | Slightly Viscous Liquid |
| 61.2% | 28.8% | 10.0% | Frozen |
| 61.2% | 33.8% | 5.0% | Frozen |
| 61.2% | 38.8% | 0.0% | Frozen |
| 65.0% | 25.0% | 10.0% | Partially Frozen |
| 68.9% | 21.2% | 10.0% | Viscous Liquid |
| 76.5% | 23.5% | 0.0% | Frozen |

### Example 4 (only compositions as defined in claim 1 are according to the invention)

To a glass sample vial was added commercial solution of bis[tetrakis(hydroxymethyl)phosphonium] sulfate solution, water and propylene glycol in an amount sufficient to produce a 20 g sample. The composition of each sample is shown below in Table 4. Each sample was then placed in a -40 °C freezer. The samples were observed after 24 hours and the physical form was noted in Table 4. Reexamination of the samples after several days revealed them to be unchanged from the original observation.

**Table 4 Propylene Glycol.**

| **THPS** | **Water** | **Propylene Glycol** | **Condition** |
|---|---|---|---|
| 25% | 15% | 60% | Very Viscous |
| 25% | 35% | 40% | Slightly viscous liquid |
| 25.5% | 7.8% | 66.7% | Very viscous liquid |
| 25.5% | 24.5% | 50.0% | Slightly viscous liquid |
| 25.5% | 41.2% | 33.3% | Frozen |
| 25.5% | 57.8% | 16.7% | Frozen |
| 25.5% | 74.5% | 0.0% | Frozen |
| 40% | 20% | 40% | Very viscous liquid |
| 40% | 30% | 30% | Frozen |
| 40% | 40% | 20% | Frozen |
| 51.0% | 15.7% | 33.3% | Very viscous liquid |
| 51.0% | 24.0% | 25.0% | Slightly viscous liquid |
| 51.0% | 32.3% | 16.7% | Frozen |
| 51.0% | 40.7% | 8.3% | Frozen |
| 51.0% | 49.0% | 0.0% | Frozen |
| 61.2% | 18.8% | 20.0% | Very viscous liquid |
| 61.2% | 23.8% | 15.0% | Slightly viscous liquid |
| 61.2% | 28.8% | 10.0% | Frozen |
| 61.2% | 33.8% | 5.0% | Frozen |
| 61.2% | 38.8% | 0.0% | Frozen |
| 76.5% | 23.5% | 0.0% | Frozen |

### Example 5 (only compositions as defined in claim 5 are according to the invention)

To a glass sample vial was added commercial solution of bis[tetrakis(hydroxymethyl)phosphonium] sulfate solution, water and glycerine in an amount sufficient to produce a 20 g sample. The composition of each sample is shown below in table 2. Each sample was then placed in a -40 °C freezer. The samples were observed after 24 hours and the physical form was noted in table 1. Reexamination of the samples after several days revealed them to be unchanged from the original observation.

**Table 5 Glycerin.**

| **THPS** | **Water** | **Glycerine** | **Condition** |
|---|---|---|---|
| 20% | 20% | 60% | Very viscous liquid |
| 20% | 30% | 50% | Slightly viscous liquid |
| 20% | 40% | 40% | Frozen |
| 30% | 15% | 55% | Very viscous liquid |
| 30% | 25% | 45% | Viscous liquid |
| 30% | 35% | 35% | Frozen |
| 40% | 20% | 40% | Viscous liquid |
| 45% | 15% | 40% | Very Very viscous liquid |
| 54% | 16% | 30% | Very viscous liquid |
| 57% | 18% | 25% | Very viscous liquid |
| 61% | 19% | 20% | Viscous liquid |

## Claims

1. A composition comprising:
(a) tetrakis(hydroxymethyl)phosphonium sulfate (THPS); (b) water; and (c) 1,2-propanediol; wherein weight percentages of (a), (b) and (c) are within an area on a ternary phase diagram bounded by five points: (A) 20% THPS/40% water/40% 1,2-propanediol; (B) 20% THPS/20% water/60% 1,2-propanediol; (C) 65% THPS/22% water/13% 1,2-propanediol; (D) 65% THPS/25% water/10% 1,2-propanediol; and (E) 40% THPS/28% water/32% 1,2-propanediol,
or comprising (a), (b), (c) and no more than 5 wt% ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the points as hereinbefore defined.

2. The composition of claim 1 in which the area is defined by points: (A), (B); (F) 30% THPS/20.5% water/49.5% 1,2-propanediol; and (G) 30% THPS/34% water/36% 1,2-propanediol; or the area defined by the points: (C), (D), (H) 47% THPS/27% water/26% 1,2-propanediol; and (I) 47% THPS/21.5% water/21.5% 1,2-propanediol.

3. A composition comprising:
(a) tetrakis(hydroxymethyl)phosphonium sulfate (THPS); (b) water; and (c) ethylene glycol; wherein weight percentages of (a), (b) and (c) are within an area on a ternary phase diagram for (a), (b) and (c) bounded by three points: (J) 7% THPS/44% water/50% ethylene glycol; (K) 25% THPS/14% water/61% ethylene glycol; and (L) 68% THPS/22% water/10% ethylene glycol, or comprising (a), (b), (c) and no more than 5 wt% ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the three points as hereinbefore defined.

4. The composition of claim 3 in which the area is defined by points: (M) 20% THPS/39% water /41% ethylene glycol; (N) 24% THPS/18% water/58% ethylene glycol; and (L).

5. A composition comprising:
(a) tetrakis(hydroxymethyl)phosphonium sulfate (THPS); (b) water; and (c) glycerine; wherein weight percentages of (a), (b) and (c) are within an area on a ternary phase diagram for (a), (b) and (c) bounded by three points: (O) 10% THPS/45% water/45% glycerine; (P) 10% THPS/25% water/65% glycerine; and (Q) 44% THPS/18% water/38% glycerine,
or comprising (a), (b), (c) and no more than 5 wt% ingredients other than (a), (b) or (c), wherein for any such composition comprising ingredients other than (a), (b) and (c), when the weight percentages of THPS, water and 1,2-propanediol are normalized to 100%, the normalized weight percentages of (a), (b) and (c) are within the area on a ternary phase diagram bounded by the three points as hereinbefore defined.

6. The composition of claim 5 in which the area is defined by points: (R) 15% THPS/37% water/ 48% glycerine; (S) 15% THPS/28% water/57% glycerine; and (Q).

## Patentansprüche

1. Zusammensetzung umfassend:
(a) Tetrakis(hydroxymethyl)phosphoniumsulfat (THPS); (b) Wasser; und (c) 1,2-Propandiol; wobei die Gewichtsprozentsätze von (a), (b) und (c) innerhalb einer Fläche auf einem ternären Phasendiagramm liegen, die von fünf Punkten begrenzt ist: (A) 20 % THPS/40 % Wasser/40 % 1,2-Propandiol; (B) 20 % THPS/20 % Wasser/60 % 1,2-Propandiol; (C) 65 % THPS/22 % Wasser/13 % 1,2-Propandiol; (D) 65 % THPS/25 % Wasser/10 % 1,2-Propandiol; und (E) 40 % THPS/28 % Wasser/32 % 1,2-Propandiol;
oder umfassend (a), (b), (c) und nicht mehr als 5 Gew.-% Bestandteile anders als (a), (b) oder (c), wobei, für irgendeine derartige Zusammensetzung, die Bestandteile anders als (a), (b) und (c) umfasst, wenn die Prozentsätze von THPS, Wasser und 1,2-Propandiol auf 100 % normalisiert werden, die normalisierten Gewichtsprozentsätze von (a), (b) und (c) innerhalb der Fläche auf einem tertiären Phasendiagramm, die durch die vorstehend definiert Punkte begrenzt ist, liegen.

2. Zusammensetzung nach Anspruch 1, wobei die Fläche durch die Punkte: (A), (B); (F) 30 % THPS/20,5 % Wasser/49,5 % 1,2-Propandiol; und (G) 30 % THPS/34 % Wasser/36 % 1,2-Propandiol definiert wird; oder die Fläche durch die Punkte (C), (D), (H) 47 % THPS/27 % Wasser/26 % 1,2-Propandiol; und (I) 47 % THPS/21,5 % Wasser/21,5 % 1,2-Propandiol definiert wird.

3. Zusammensetzung umfassend
(a) Tetrakis(hydroxymethyl)phosphoniumsulfat (THPS); (b) Wasser; und (c) Ethylenglykol; wobei die Gewichtsprozentsätze von (a), (b) und (c) innerhalb einer Fläche auf einem ternären Phasendiagramm für (a), (b) und (c) liegen, die von drei Punkten begrenzt ist: (J) 7 % THPS/44 % Wasser/50 % Ethylenglykol; (K) 25 % THPS/14 % Wasser/61 % Ethylenglykol; und (L) 68 % THPS/22 % Wasser/10 % Ethylenglykol,
oder umfassend (a), (b), (c) und nicht mehr als 5 Gew.-% Bestandteile anders als (a), (b) oder (c), wobei, für irgendeine derartige Zusammensetzung, die Bestandteile anders als (a), (b) und (c) umfasst, wenn die Prozentsätze von THPS, Wasser und 1,2-Propandiol auf 100 % normalisiert sind, die normalisierten Gewichtsprozentsätze von (a), (b) und (c) innerhalb der Fläche auf einem tertiären Phasendiagramm, die durch die vorstehend definiert Punkte begrenzt ist, liegen.

4. Zusammensetzung nach Anspruch 3, wobei die Fläche durch die Punkte: (M) 20 % THPS/39 % Wasser/41 % Ethylenglykol; (N) 24 % THPS/18 % Wasser/58 % Ethylenglykol; und (L) definiert wird.

5. Zusammensetzung umfassend:
(a) Tetrakis(hydroxymethyl)phosphoniumsulfat (THPS); (b) Wasser; und (c) Glycerin; wobei die Gewichtsprozentsätze von (a), (b) und (c) innerhalb einer Fläche auf einem ternären Phasendiagramm für (a), (b) oder (c) liegen, die von drei Punkten begrenzt ist: (O) 10 % THPS/45 % Wasser/45 % Glycerin; (P) 10 % THPS/25 % Wasser/65 % Glycerin; und (Q) 44 % THPS/18 % Wasser/38 % Glycerin,
oder umfassend (a), (b), (c) und nicht mehr als 5 Gew.-% Bestandteile anders als (a), (b) oder (c), wobei für irgend eine derartige Zusammensetzung, die Bestandteile anders als (a), (b) und (c) umfasst, wenn die Prozentsätze von THPS, Wasser und 1,2-Propandiol auf 100 % normalisiert sind, die normalisierten Gewichtsprozentsätze von (a), (b) und (c) innerhalb der Fläche auf einem tertiären Phasendiagramm, die durch die vorstehend definiert Punkte begrenzt ist, liegen.

6. Zusammensetzung nach Anspruch 5, wobei der Fläche durch die Punkte: (R) 15 % THPS/37 % Wasser/48 % Glycerin; (S) 15 % THPS/28 % Wasser/57 % Glycerin; und (Q) definiert ist.

## Revendications

1. Composition comprenant:
(a) du sulfate de tétrakis(hydroxyméthyl)phosphonium (THPS); (b) de l'eau; et (c) du 1,2-propanediol; les pourcentages en poids de (a), (b) et (c) se situant à l'intérieur d'une aire sur un diagramme de phase ternaire délimitée par cinq points: (A) 20 % de THPS/40 % d'eau/40 % de 1,2-propanediol; (B) 20 % de THPS/20 % d'eau/60 % de 1,2-propanediol; (C) 65 % de THPS/22 % d'eau/13 % de 1,2-propanediol; (D) 65 % de THPS/25 % d'eau/10 % de 1,2-propanediol; et (E) 40 % de THPS/28 % d'eau/32 % de 1,2-propanediol,
ou comprenant (a), (b), (c) et pas plus de 5 % en poids d'ingrédients autres que (a), (b) ou (c), dans laquelle pour toute telle composition comprenant des ingrédients autres que (a), (b) et (c), lorsque les pourcentages en poids de THPS, d'eau et de 1,2-propanediol sont normalisés à 100 %, les pourcentages normalisés en poids de (a), (b) et (c) se situent à l'intérieur de l'aire sur un diagramme de phase ternaire délimitée par les points tels que définis ci-dessus.

2. Composition selon la revendication 1 dans laquelle l'aire est définie par les points: (A), (B); (F) 30 % de THPS/20,5 % d'eau/49,5 % de 1,2-propanediol; et (G) 30 % de THPS/34 % d'eau/36 % de 1,2-propanediol; ou l'aire définie par les points: (C), (D), (H) 47 % de THPS/27 % d'eau/26 % de 1,2-propanediol; et (I) 47 % de THPS/21,5 % d'eau/21,5 % de 1,2-propanediol.

3. Composition comprenant:
(a) du sulfate de tétrakis(hydroxyméthyl)phosphonium (THPS); (b) de l'eau; et (c) de l'éthylène glycol; les pourcentages en poids de (a), (b) et (c) se situant à l'intérieur d'une aire sur un diagramme de phase ternaire pour (a), (b) et (c) délimitée par trois points: (J) 7 % de THPS/44 % d'eau/50 % d'éthylène glycol; (K) 25 % de THPS/14 % d'eau/61 % d'éthylène glycol; et (L) 68 % de THPS/22 % d'eau/10 % d'éthylène glycol,
ou comprenant (a), (b), (c) et pas plus de 5 % en poids d'ingrédients autres que (a), (b) ou (c), dans laquelle pour toute telle composition comprenant des ingrédients autres que (a), (b) et (c), lorsque les pourcentages en poids de THPS, d'eau et de 1,2-propanediol sont normalisés à 100 %, les pourcentages normalisés en poids de (a), (b) et (c) se situent à l'intérieur de l'aire sur un diagramme de phase ternaire délimitée par les trois points tels que définis ci-dessus.

4. Composition selon la revendication 3 dans laquelle l'aire est définie par les points: (M) 20 % de THPS/39 % d'eau /41 % d'éthylène glycol; (N) 24 % de THPS/18 % d'eau/58 % d'éthylène glycol; et (L).

5. Composition comprenant:
(a) du sulfate de tétrakis(hydroxyméthyl)phosphonium (THPS); (b) de l'eau; et (c) de la glycérine; les pourcentages en poids de (a), (b) et (c) se situant à l'intérieur d'une aire sur un diagramme de phase ternaire pour (a), (b) et (c) délimitée par trois points: (O) 10 % de THPS/45 % d'eau/45 % de glycérine; (P) 10 % de THPS/25 % d'eau/65 % de glycérine; et (Q) 44 % de THPS/18 % d'eau/38 % de glycérine,
ou comprenant (a), (b), (c) et pas plus de 5 % en poids d'ingrédients autres que (a), (b) ou (c), dans laquelle pour toute telle composition comprenant des ingrédients autres que (a), (b) et (c), lorsque les pourcentages en poids de THPS, d'eau et de 1,2-propanediol sont normalisés à 100 %, les pourcentages normalisés en poids de (a), (b) et (c) se situent à l'intérieur de l'aire sur un diagramme de phase ternaire délimitée par les trois points tels que définis ci-dessus.

6. Composition selon la revendication 5 dans laquelle l'aire est définie par les points: (R) 15 % de THPS/37 % d'eau/ 48 % de glycérine; (S) 15 % de THPS/28 % d'eau/57 % de glycérine; et (Q).
